# EUROPÄISCHE PATENTSCHRIFT

(11) **EP 2 185 277 B1**
(45) Veröffentlichungstag und Bekanntmachung des Hinweises auf die Patenterteilung: **12.01.2011**
(21) Anmeldenummer: 08784898.2
(22) Anmeldetag: 18.07.2008
(51) Int. Cl.: B01F 7/00, B01F 3/04

(54) **RÜHRVORRICHTUNG FÜR BELEBTSCHLÄMME**
STIRRING DEVICE FOR ACTIVATED SLUDGES
DISPOSITIF D'AGITATION POUR BOUES ACTIVÉES

(30) Priorität: 09.08.2007 DE 102007037586
(43) Veröffentlichungstag der Anmeldung: 19.05.2010
(73) Patentinhaber: INVENT Umwelt- und Verfahrenstechnik AG, 91058 Erlangen (DE)
(72) Erfinder: HÖFKEN, Marcus, 91054 Erlangen (DE)
(74) Vertreter: Gassner, Wolfgang
(86) Internationale Anmeldenummer: PCT/EP2008/005924
(87) Internationale Veröffentlichungsnummer: WO 2009/018916

(56) Entgegenhaltungen:
- DE-A1- 4 218 027
- DE-U1- 9 106 639
- DE-U1- 20 207 376
- FR-A- 2 351 693
- JP-A- 61 125 426

## Beschreibung

Die Erfindung betrifft eine Rührvorrichtung für Belebtschlämme nach dem Oberbegriff des Anspruchs 1.

Eine solche Rührvorrichtung ist aus der DE 42 18 027 A1 bekannt. Ferner ist es aus dem vorgenannten Dokument bekannt, an der Welle ein Messer oder eine Messerschar zum Zerkleinern von Grobstoffen anzubringen. Die Messer können mit einem Anstellwinkel schräg gestellt sein. Die DE 42 18 027 A1 enthält keine Aussage darüber, wie eine eventuell mit den angestellten Messern erzeugte Strömung gerichtet ist und ob mit der daraus bekannten Messerschar eine gerichtete Strömung erzeugt wird. Eine weitere Rühvorrichtung ist aus der DE 20207376 U1 bekannt.

Nach dem Stand der Technik besteht das Bedürfnis, die Rühreffizienz der gattungsgemäßen Rührvorrichtung weiter zu verbessern.

Die Aufgabe der vorliegenden Erfindung besteht in der Bereitstellung einer Rührvorrichtung mit einer weiter verbesserten Rühreffizienz.

Die Lösung dieser Aufgabe ergibt sich aus den Merkmalen des Anspruchs 1. Zweckmäßige Ausgestaltungen der Erfindung ergeben sich aus den Merkmalen der Ansprüche 2 bis 10.

Nach Maßgabe der Erfindung ist vorgesehen, dass an der Welle zumindest ein Propeller angebracht ist, welcher bei einer Rotation des Rührkörpers in der Rotationsrichtung eine auf die Oberseite des Rührkörpers gerichtete Strömung erzeugt. Infolge dieser Strömung wird der Druck auf die Oberseite des Rührkörpers erhöht. Es kann mit den Transportrippen eine noch effizientere, vom Umfangsrand des Rührkörper weg gerichtete, Strömung ins Becken erzeugt werden. Die vorgeschlagene Lösung lässt sich einfach und kostengünstig realisieren.

Unter einem "Propeller" wird im Sinne der vorliegenden Erfindung eine strömungsmechanisch optimierte Einrichtung zur Erzeugung einer auf die Oberseite des Rührkörpers gerichteten, etwa parallel zur Welle gerichteten Axialströmung verstanden. Ein Propellerflügel des Propellers kann einen radial nach außen hin abnehmenden Anstellwinkel aufweisen. Der Propellerflügel kann aus einem elastischen Material hergestellt sein, so dass der Anstellwinkel insbesondere in radial außen liegenden Bereichen sich mit zunehmender Drehzahl vergrößert. Ein Flügel des Propellers kann ein strömungsmechanisch optimiertes Profil ähnlich dem Flügel einer Flugzeugtragfläche aufweisen. Insbesondere kann eine Anströmkante des Flügels gerundet und eine Abströmkante spitz auslaufend ausgebildet sein.

Nach einer vorteilhaften Ausgestaltung der Erfindung ist vorgesehen, dass die Transportrippen zum Umfangsrand hin von einer etwa radialen Richtung in eine entgegen der Rotationsrichtung gerichtete etwa tangentiale Richtung umbiegen. Durch die vorgeschlagene gebogene Ausgestaltung der Transportrippen kann eine Beschleunigung der Strömung an der Oberseite und damit eine weitere Steigerung der Effizienz der vom Umfangsrand des Rührkörpers weg gerichteten Strömung erreicht werden.

Nach einer weiteren Ausgestaltung ist vorgesehen, dass die Transportrippen sich lediglich in einem äußeren radialen Abschnitt der Oberseite erstrecken. Wegen der im äußeren radialen Abschnitt herrschenden hohen Winkelgeschwindigkeit ist hier die Wirkung der Transportrippen besonders groß.

An einer der Oberseite gegenüberliegenden Unterseite können mehrere im Wesentlichen radial verlaufende Scherrippen vorgesehen sein. Die Scherrippen dienen zur Verwirbelung von an einer Unterseite des Rührkörpers zugeführter Luft und damit zur Herstellung von Luftbläschen.

Zur weiteren Erhöhung der Effizienz ist vorgesehen, dass der Propeller in der Nähe des Rührkörpers an der Welle angebracht ist. An der Welle können auch mehrere Propeller übereinander vorgesehen sein. Das ermöglicht eine weitere Beschleunigung der mit den Propellern erzeugten, auf die Oberseite des Rührkörpers gerichteten, Strömung.

Nach einer weiteren Ausgestaltung ist vorgesehen, dass ein in der Nähe der Unterseite des Rührkörpers sich erstreckendes Ende der Welle in einem Fanglager aufgenommen ist. Ein anderes Ende der Welle ist zweckmäßigerweise mit einem Getriebemotor verbunden. Durch die vorgeschlagene zweiseitige endständige Aufnahme der Welle wird eine präzise Drehbewegung um eine Achse erreicht. Unerwünschte Pendel- oder Präzessionsbewegungen des Rührkörpers werden vermieden.

Nach einer weiteren Ausgestaltung kann es sich bei dem Getriebemotor um einen Tauchmotor handeln. In diesem Fall ist die Rührvorrichtung als Tauchvorrichtung ausgebildet.

Der Getriebemotor ist zweckmäßigerweise an einem den Rührkörper umgebenden Gestell befestigt. In diesem Fall ist das Fanglager zweckmäßigerweise am Gestell befestigt. Damit kann die Vorrichtung als Montageeinheit in das Becken eingesetzt werden.

Das Gestell kann auch turmartig ausgebildet sein, so dass ein an dessen Spitze befestigter Getriebemotor oberhalb des Spiegels eines zu rührenden Mediums sich befindet. Das erleichtert die Wartung des Getriebemotors.

Selbstverständlich ist es auch möglich, das Fanglager am Boden des Beckens zu befestigen.

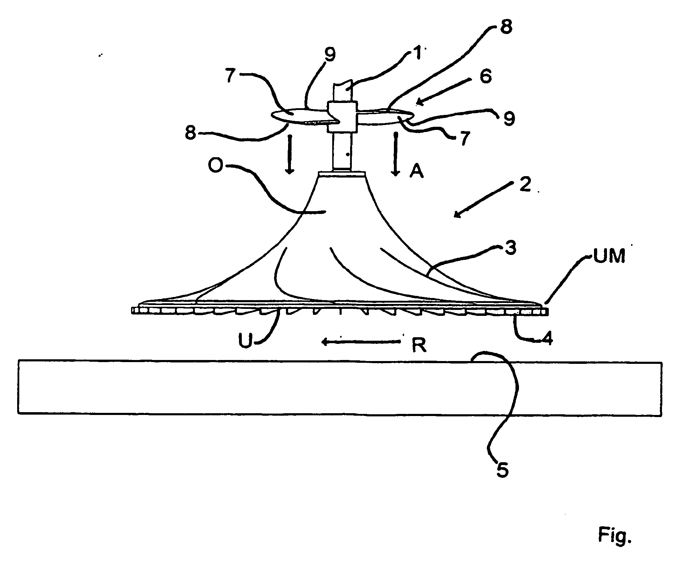

Nachfolgend wird ein Ausführungsbeispiel der Erfindung anhand der einzigen Zeichnung näher erläutert.

Die einzige Zeichnung zeigt eine teilweise Seitenansicht einer Rührvorrichtung. An einer Welle 1 ist ein allgemein mit dem Bezugszeichen 2 angebrachter, hyperboloidartig ausgebildeter Rührkörper befestigt. An einer Oberseite O des Rührkörpers 2 sind mehrere Transportrippen 3 vorgesehen. Die Transportrippen 3 erstrecken sich hier lediglich über einen radial außen liegenden Abschnitt der Oberseite O. Sie biegen zu einem Umfangsrand UM des Rührkörpers 2 hin von einer etwa radialen Richtung entgegen der mit dem Pfeil R kenntlich gemachten Rotationsrichtung in eine etwa tangentiale Richtung um. An einer Unterseite U des Rührkörpers 2 sind im wesentlichen radial verlaufende Scherrippen 4 vorgesehen. Mit dem Bezugszeichen 5 ist ein Boden eines Beckens (hier nicht gezeigt) bezeichnet.

Ein in der Nähe des Rührkörpers 2 an der Welle 1 angebrachter Propeller 6 weist hier zwei Flügel 7 auf. Eine Anströmkante 8 jeder der Flügel 7 weist in radialer Richtung eine entgegen der Rotationsrichtung R verlaufende Biegung auf. Die Anströmkante 8 kann überdies gerundet ausgebildet sein. Eine Abströmkante 9 ist zweckmäßigerweise spitz auslaufend ausgebildet.

Die Funktion der gezeigten Rührvorrichtung ist folgende:

Bei einer Rotation des Rührkörpers 2 wird gleichzeitig der an der Welle 1 befestigte Propeller 6 rotiert und infolgedessen eine mit den Pfeilen A angedeutete Axialströmung in Richtung der Oberseite O des Rührkörpers 2 erzeugt. Die Axialströmung A wird durch die hyperboloidartige Ausgestaltung der Oberseite O umgelenkt in eine im Wesentlichen radiale Richtung. Sie wird zusätzlich durch die Wirkung der Transportrippen 3 beschleunigt, so dass sich eine besonders effektive, vom Umfangsrand UM weg gerichtete Strömung ergibt, welche im Wesentlichen parallel zum Boden 5 verläuft.

Selbstverständlich können anstelle des hier gezeigten einen Propellers 6 auch mehrere Propeller übereinander an der Welle 1 befestigt sein. Die Propeller 6 können dabei zwei, drei, vier oder fünf Flügel 7 aufweisen. Die Flügel 7 können gegeneinander versetzt sein. Ein Durchmesser der Propeller 6 ist zweckmäßigerweise so gewählt, dass er kleiner ist als der Durchmesser des Rührkörpers 2. Zweckmäßigerweise ist der Durchmesser eines Propellers 6 das 0,2- bis 0,8-fache, vorzugsweise das 0,3- bis 0,5-fache, des Rührkörpers 2. Die Anstellkanten 8 der Propellerblätter 7 können eine entgegen der Rotationsrichtung R verlaufende säbelartige Umbiegung aufweisen, um ein Einfangen zopfbildender Verunreinigungen zu vermeiden.

Eine Steigung der Propellerblätter 7 kann in eine Richtung radial nach außen hin unterschiedlich sein. Sofern die Propellerblätter 7 beispielsweise aus einem elastischen Kunststoffmaterial hergestellt sind, kann die Steigung bedingt durch eine elastische Verformung der Propellerblätter 7 sich in Abhängigkeit der Drehzahl ändern. Damit kann eine an die Drehzahl angepasste, besonders effektive Axialströmung A erzielt werden.

### Bezugszeichenliste

- 1: Welle
- 2: Rührkörper
- 3: Transportrippe
- 4: Scherrippe
- 5: Boden
- 6: Propeller
- 7: Flügel
- 8: Anströmkante
- 9: Abströmkante

- A: Axialströmung
- O: Oberseite
- R: Rotationsrichtung
- U: Unterseite
- UM: Umfangsrand

## Patentansprüche

1. Rührvorrichtung für Belebtschlämme mit einem an einer Welle (1) angebrachten, hyperboloidartig ausgebildeten Rührkörper (2),
wobei an einer Oberseite (O) des Rührkörpers (2) mehrere zu dessen Umfangsrand (UM) hin verlaufende Transportrippen (3) vorgesehen sind,
wobei die Transportrippen (3) zumindest abschnittsweise bezüglich einer Radialrichtung schräg verlaufen und
wobei eine Schrägstellung der Transportrippen (3) so gewählt ist, dass bei einer Rotation des Rührkörpers (2) in einer vorgegebenen Rotationsrichtung (R) eine radial vom Umfangsrand (UM) weg gerichtete Strömung erzeugt wird,
**dadurch gekennzeichnet, dass**
an der Welle (1) zumindest ein Propeller (6) angebracht ist, welcher bei einer Rotation des Rührkörpers (2) in der Rotationsrichtung (R) eine auf die Oberseite (O) des Rührkörpers (2) gerichtete Strömung (A) erzeugt.

2. Rührvorrichtung nach Anspruch 1, wobei die Transportrippen (3) zum Umfangsrand (UM) hin von einer etwa radialen Richtung in eine entgegen der Rotationsrichtung (R) gerichtete etwa tangentiale Richtung umbiegen.

3. Rührvorrichtung nach einem der vorhergehenden Ansprüche, wobei die Transportrippen (3) sich lediglich in einem äußeren radialen Abschnitt der Oberseite (O) erstrecken.

4. Rührvorrichtung nach einem der vorhergehenden Ansprüche, wobei an einer der Oberseite (O) gegenüberliegenden Unterseite (U) mehrere im Wesentlichen radial verlaufende Scherrippen (4) vorgesehen sind.

5. Rührvorrichtung nach einem der vorhergehenden Ansprüche, wobei der Propeller (6) in der Nähe des Rührkörpers (2) an der Welle (1) angebracht ist.

6. Rührvorrichtung nach einem der vorhergehenden Ansprüche, wobei ein in der Nähe der Unterseite (U) des Rührkörpers (2) sich erstreckendes Ende der Welle (1) in einem Fanglager aufgenommen ist.

7. Rührvorrichtung nach einem der vorhergehenden Ansprüche, wobei ein anderes Ende der Welle (1) mit einem Getriebemotor verbunden ist.

8. Rührvorrichtung nach einem der vorhergehenden Ansprüche, wobei der Getriebemotor ein Tauchmotor ist.

9. Rührvorrichtung nach einem der vorhergehenden Ansprüche, wobei der Getriebemotor an einem den Rührkörper (2) umgebenden Gestell befestigt ist.

10. Rührvorrichtung nach dem Anpruch 6,
wobei das Fanglager am Gestell oder am Boden (5) eines Beckens befestigbar ist.

## Claims

1. Stirring device for activated sludges with a hyperboloid-like stirring body (2) attached to a shaft (1),
wherein a plurality of transport ribs (3) running towards the circumferential boundary (UM) of the stirring body (2) is provided on an upper side (O) of the stirring body (2),
wherein the transport ribs (3) are running inclined at least in sections with respect to a radial direction and
wherein an inclination of the transport ribs (3) is selected in such a manner that, when the stirring body (2) rotates in a specified direction of rotation (R), a flow radially pointing away from the circumferential boundary (UM) is generated,
**characterized in that**
at least one propeller (6) is attached to the shaft (1) which propeller (6) generates a flow (A) directed towards the upper side (O) of the stirring body (2) during a rotation of the stirring body (2) in the direction of rotation (R).

2. Stirring device as defined in claim 1, wherein the transport ribs (3) bend towards the circumferential boundary (UM) from an approximately radial direction in an approximately tangential direction directed against the direction of rotation (R).

3. Stirring device as defined in one of the preceding claims, wherein the transport ribs (3) only extend in an outer radial section of the upper side (0).

4. Stirring device as defined in one of the preceding claims, wherein a plurality of essentially radially running shear ribs (4) is provided on an underside (U) opposite the upper side (O).

5. Stirring device as defined in one of the preceding claims, wherein the propeller (6) is attached to the shaft (1) in the vicinity of the stirring body (2).

6. Stirring device as defined in one of the preceding claims, wherein an end of the shaft (1) extending in the vicinity of the underside (U) of the stirring body (2) is held in a safety bearing.

7. Stirring device as defined in one of the preceding claims, wherein another end of the shaft (1) is connected to a gear unit motor.

8. Stirring device as defined in one of the preceding claims, wherein the gear unit motor is a submersible motor.

9. Stirring device as defined in one of the preceding claims, wherein the gear unit motor is mounted on a frame surrounding the stirring body (2).

10. Stirring device as defined in claim 6, wherein the safety bearing can be mounted on the frame or on the bottom (5) of a basin.

## Revendications

1. Dispositif d'agitation pour boues activées équipé d'un corps agitateur (2) conçu de manière hyperboloïde et disposé sur un arbre (1),
plusieurs nervures de transport (3) qui s'étendent en direction du bord périphérique (UM) du corps agitateur (2) étant prévues sur une face supérieure (0) de celui-ci,
les nervures de transport (3) s'étendant au moins partiellement de manière oblique par rapport à un sens radial et
une position oblique des nervures de transport (3) étant choisie de façon à ce qu'un écoulement dont l'orientation s'éloigne radialement du bord périphérique (UM) soit créé lors d'une rotation du corps agitateur (2) dans un sens de rotation prédéfini (R),
**caractérisé en ce que**
au moins une hélice (6) est disposée sur l'arbre (1), laquelle crée un écoulement (A) orienté vers la face supérieure (O) du corps agitateur (2) lors d'une rotation du corps agitateur (2) dans le sens de rotation (R).

2. Dispositif d'agitation selon la revendication 1, dans lequel les nervures de transport (3) se recourbent vers le bord périphérique (UM) à partir d'une direction approximativement radiale en une direction approximativement tangentielle opposée au sens de rotation (R).

3. Dispositif d'agitation selon l'une des revendications précédentes, dans lequel les nervures de transport (3) s'étendent uniquement dans un segment radial externe de la face supérieure (O).

4. Dispositif d'agitation selon l'une des revendications précédentes, dans lequel plusieurs ailettes de cisaillement (4) s'étendant essentiellement dans un sens radial sont prévues sur une face inférieure (U) opposée à la face supérieure (O).

5. Dispositif d'agitation selon l'une des revendications précédentes, dans lequel l'hélice (6) est montée sur l'arbre (1) à proximité du corps agitateur (2).

6. Dispositif d'agitation selon l'une des revendications précédentes, dans lequel une extrémité de l'arbre (1) s'étendant à proximité de la face inférieure (U) du corps agitateur (2) est logée dans un palier récepteur.

7. Dispositif d'agitation selon l'une des revendications précédentes, dans lequel une autre extrémité de l'arbre (1) est reliée à un motoréducteur.

8. Dispositif d'agitation selon l'une des revendications précédentes, dans lequel le motoréducteur est un moteur submersible.

9. Dispositif d'agitation selon l'une des revendications précédentes, dans lequel le motoréducteur est fixé à un bâti entourant le corps agitateur (2).

10. Dispositif d'agitation selon la revendication 6, dans lequel le palier récepteur peut être fixé sur le bâti ou sur le fond (5) d'un bac.
